# EUROPEAN PATENT APPLICATION

(11) **EP 4 737 429 A1**
(43) Date of publication of application: **06.05.2026**
(21) Application number: 25211376.6
(22) Date of filing: 27.10.2025
(51) Int. Cl.: C04B 41/00, C04B 41/45, C04B 41/52, C04B 41/70, C04B 41/87

(54) **POROUS MACHINED COATINGS**

(30) Priority: 29.10.2024 US 202418930475
(71) Applicant: RTX Corporation, Farmington, CT 06032 (US)
(72) Inventor: KOLE, Molly, Hartford, 06106 (US); ALIDOOST, Jalil, Windsor, 06095 (US)
(74) Representative: Dehns

(57) **Abstract**

A method of fabricating a porous machined coating for a ceramic matrix composite, comprising the steps of providing a ceramic matrix composite; optionally depositing on the ceramic matrix composite at least one bond coat; depositing on the at least one optional bond coat at least one ceramic powder to form at least one ceramic coat; and, machining the at least one ceramic coat to form at least one machined ceramic coat, wherein the at least one machined ceramic coat comprises a porosity gradient of approximately 5 percent by volume to approximately 30 percent by volume, the porosity gradient comprising an average fine pore size range of approximately 1 µm to approximately 25 µm, to an average coarse pore size range of approximately 30 µm to approximately 55 µm.

## Description

### FIELD OF THE INVENTION

The subject matter disclosed herein relates to coatings and, in particular, to porous machined coatings.

### BACKGROUND OF THE INVENTION

Gas turbine engines include sections such as a fan, a low-pressure compressor, a high-pressure compressor, a combustor and a turbine. During operation, at least one of these sections may achieve high internal temperatures. Those gas turbine engine components located in the "hot sections" may comprise ceramic matrix composites ("CMC"). These CMC gas turbine components may come in contact with metallic or metal-containing gas turbine engine components. Those CMC components in contact with metallic or metal-containing components may further include a ceramic coating applied to the surface of the CMC component. The ceramic coating may be sufficiently thick to be machined down, through contact with the metallic or metal-containing components during operation, and create a seal between the CMC component and metallic or metal-containing component. During operation, the difference in temperature between the CMC component and metallic or metal-containing component may be drastic, e.g., up to 2,500°F (1371 °C). As a result, a thermal gradient may be exhibiting through the thickness of the ceramic coating. This resultant thermal gradient may cause stress(es) that may potentially lead to premature failure of the CMC component. In addition, the elevated operating temperatures may result in phase changes within candidate material systems, leading to volumetric changes and associated stresses in the ceramic coating. For example, the observed stress(es) may lead to cohesive cracking within the coating, or premature delamination between coating layers on the exterior surface of the CMC component.

There exists a need to mitigate the aforementioned stress(es) throughout the ceramic coating.

### SUMMARY OF THE INVENTION

The present disclosure is directed, in a first aspect, to a method of fabricating a porous machined coating for a ceramic matrix composite, comprising the steps of providing a ceramic matrix composite; optionally depositing on the ceramic matrix composite at least one bond coat; depositing on the at least one optional bond coat at least one ceramic powder to form at least one ceramic coat; and machining the at least one ceramic coat to form at least one machined ceramic coat, wherein the at least one machined ceramic coat comprises an porosity gradient of approximately 5 percent by volume to approximately 30 percent by volume, the porosity gradient comprising an average fine pore size range of approximately 1 µm to approximately 25 µm, to an average coarse pore size range of approximately 30 µm to approximately 55 µm.

In another aspect, the present disclosure is directed to a gas turbine engine component, comprising a ceramic matrix composite substrate having at least one optional bond coat, and the at least one machined ceramic coat comprises an porosity of approximately 5 percent by volume to approximately 30 percent by volume, the porosity comprising a gradient having an average fine pore size range of approximately 1 µm to approximately 25 µm, to an average coarse pore size range of approximately 30 µm to approximately 55 µm.

In yet another aspect, which the Applicant expressly reserves the right to claim independently, the present disclosure is directed to a gas turbine engine, comprising at least one rotatable gas turbine engine component; at least one stationary gas turbine engine component disposed opposite the at least one rotatable gas turbine engine component, the at least one stationary gas turbine engine component comprises a ceramic matrix composite substrate having at least one optional bond coat, and the at least one machined ceramic coat comprises an porosity of approximately 5 percent by volume to approximately 30 percent by volume, the porosity comprises a gradient having an average fine pore size range of approximately 1 µm to approximately 25 µm, to an average coarse pore size range of approximately 30 µm to approximately 55 µm.

In further examples of the present disclosure, including further examples of the above, the average fine pore size range of the gradient is proximate to an interface between the at least one optional bond coat and the at least one machined ceramic coat; the average coarse pore size range of the gradient is proximate to an exterior surface of the at least one machined ceramic coat; and, an average pore size of the gradient increases from the interface to the exterior surface.

In further examples of the present disclosure, including further examples of the above, the average coarse pore size range of the gradient is proximate to an interface between the at least one optional bond coat and the at least one machined ceramic coat; and the average fine pore size range of the gradient is proximate to an exterior surface of the at least one machined ceramic coat; and, an average pore size of the gradient decreases from the interface to the exterior surface.

In further examples of the present disclosure, including further examples of the above, depositing the at least one ceramic powder comprises air plasma spraying the at least one ceramic powder.

In further examples of the present disclosure, including further examples of the above: air plasma spraying includes adjusting one or more of the following parameters: a distance between a nozzle of an air plasma spraying apparatus and a surface of the ceramic matrix composite; a voltage of the air plasma spraying apparatus; a powder feed rate of the air plasma spraying apparatus; and a temperature of the surface of the ceramic matrix composite.

In further examples of the present disclosure, including further examples of the above, adjusting the temperature of the surface of the ceramic matrix composite includes heat treating the surface of the ceramic matrix composite prior to depositing the at least one ceramic powder.

In further examples of the present disclosure, including further examples of the above, prior to depositing the at least one ceramic powder, the method further comprises providing the at least one ceramic powder comprising a mixture of one or more ceramic powders and one or more polymeric powders.

In further examples of the present disclosure, including further examples of the above, the at least one ceramic powder comprises one or more of the following: mullite, hafnium silicate, ytterbium disilicate, yttrium disilicate, and combinations thereof.

In further examples of the present disclosure, including further examples of the above, the polymeric powders include at least polyester.

In further examples of the present disclosure, including further examples of the above, the polymeric powder is present in an amount of approximately 1 percent by weight of the mixture to approximately 10 percent by weight of the mixture.

In further examples of the present disclosure, including further examples of the above, the method further comprises heat treating the at least one deposited mixture of one or more ceramic powders and one or more polymeric powders at a temperature of approximately of 1,400°F (760 °C) to approximately 2,700°F (1482 °C), to form the at least one ceramic coat comprising the porosity gradient.

In further examples of the present disclosure, including further examples of the above, the at least one deposited ceramic coat includes a thickness of approximately 30 mil (0.762 mm) to approximately 100 mil (2.54 mm).

In further examples of the present disclosure, including further examples of the above, the at least one optional bond coat comprises one or more of silicon, silicon-containing material, silicon oxycarbide, mullite, and combinations thereof.

In further examples of the present disclosure, including further examples of the above, the method further comprises pre-heating the ceramic matrix component prior to optionally depositing the at least one bond coat.

In further examples of the present disclosure, including further examples of the above, the method further comprises pre-heating the ceramic matrix composite and the at least one optional bond coat prior to depositing the at least one ceramic powder.

In further examples of the present disclosure, including further examples of the above, the at least one machined ceramic coat comprises a thickness of approximately 30 mil (0.762 mm) to approximately 50 mil (1.27 mm).

In further examples of the present disclosure, including further examples of the above, the average fine pore size range of the gradient is proximate to an interface between the at least one optional bond coat and the at least one machined ceramic coat; the average coarse pore size range of the gradient is proximate to an exterior surface of the at least one machined ceramic coat; and, an average pore size of the gradient increases from the interface to the exterior surface.

In further examples of the present disclosure, including further examples of the above, the average coarse pore size range of the gradient is proximate to an interface between the at least one optional bond coat and the at least one machined ceramic coat; and the average fine pore size range of the gradient is proximate to an exterior surface of the at least one machined ceramic coat; and, an average pore size of the gradient decreases from the interface to the exterior surface.

In further examples of the present disclosure, including further examples of the above, the at least one ceramic coat comprises an at least one air plasma-sprayed layer ceramic coat.

In further examples of the present disclosure, including further examples of the above, the at least one ceramic coat comprises a thickness of approximately 30 mil (0.762 mm) to approximately 100 mil (2.54 mm).

In further examples of the present disclosure, including further examples of the above, the at least one ceramic coat comprises one or more of the following: mullite, hafnium silicate, ytterbium disilicate, yttrium disilicate, and combinations thereof.

In further examples of the present disclosure, including further examples of the above, the at least one optional bond coat comprises one or more of silicon, silicon-containing material, silicon oxycarbide, mullite, and combinations thereof.

In further examples of the present disclosure, including further examples of the above, the average fine pore size range of the gradient is proximate to an interface between the at least one optional bond coat and the at least one machined ceramic coat; the average coarse pore size range of the gradient is proximate to an exterior surface of the at least one machined ceramic coat; and, an average pore size of the gradient increases from the interface to the exterior surface.

In further examples of the present disclosure, including further examples of the above, the average coarse pore size range of the gradient is proximate to an interface between the at least one optional bond coat and the at least one machined ceramic coat; and the average fine pore size range of the gradient is proximate to an exterior surface of the at least one machined ceramic coat; and, an average pore size of the gradient decreases from the interface to the exterior surface.

In further examples of the present disclosure, including further examples of the above, the at least one ceramic coat comprises an at least one air plasma-sprayed layer ceramic coat.

In further examples of the present disclosure, including further examples of the above, the at least one ceramic coat comprises a thickness of approximately 30 mil (0.762 mm) to approximately 100 mil (2.54 mm).

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine.
FIG. 2 is an illustration of an exemplary method for fabricating a porous machined coating for a ceramic matrix composite.
FIG. 3 is an illustration of a CMC exhibiting an exemplary machined coating disclosed herein.
FIG. 4 is an illustration of an exemplary machined coating for use herein.
FIG. 5 is an illustration of an exemplary machined coating for use herein.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

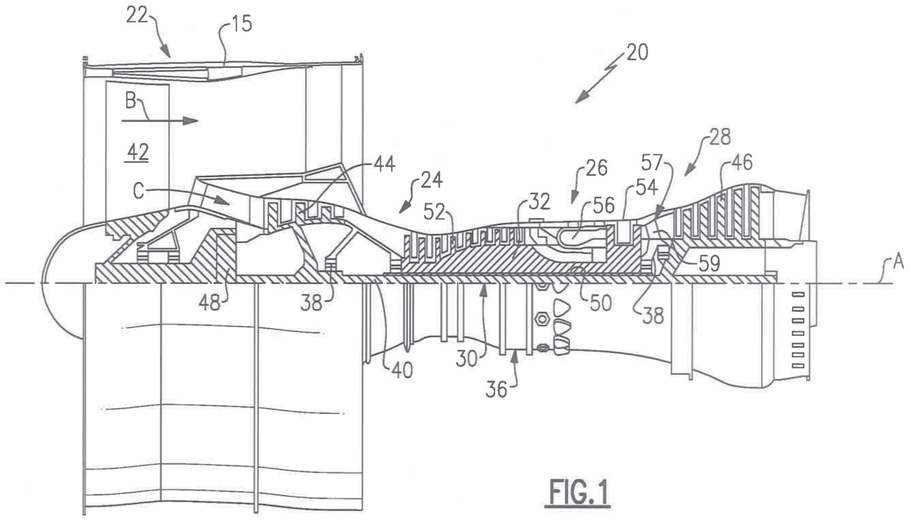

Referring now to FIG. 1, a schematic illustration of an exemplary gas turbine engine 20 (i.e., a two-spool turbofan) is shown. The gas turbine engine 20 includes a fan section 22, a compressor section 24, a combustor section 26, and a turbine section 28. The fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

The gas turbine engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to fan 42 through a speed change mechanism, which in this exemplary embodiment is illustrated as a geared structure 48 to drive fan 42 at a lower speed than the low spool 30. The high-speed spool 32 includes an outer shaft 50 that interconnects a second (or high) pressure compressor 52 and a second (or high) pressure turbine 54. The combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

Throughout the gas turbine engine 20 there are surfaces in contact with and not in contact with the core airflow path C. Those surfaces in contact with the core airflow path C are gas path surfaces. In contrast, those surfaces not in contact with the core airflow path C are non-gas path surfaces. Those non-gas path surfaces may have the exemplary porous machined coating disclosed herein deposited thereupon.

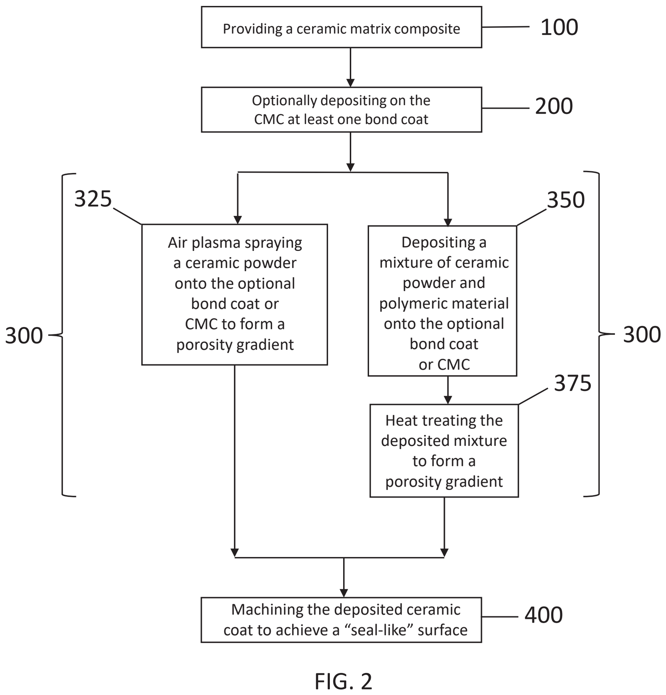

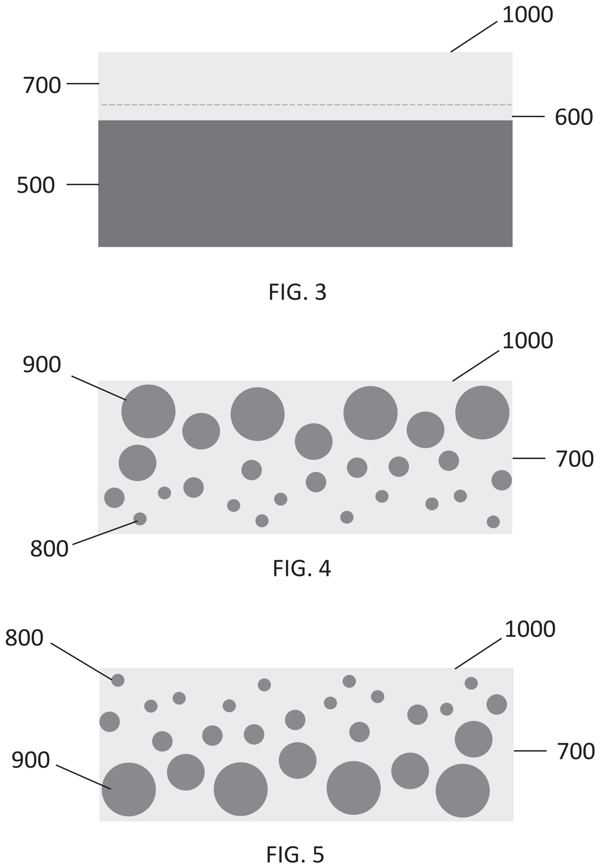

Referring now to FIG. 2, a flowchart illustrating an exemplary method for fabricating a porous machined coating for a ceramic matrix composite is shown. As used herein, the term "a porous machined coating" may be defined as a porous coating that is deposited and subsequently machined to remove at least a portion of an exterior of the coating and fabricate a smooth surface for the purpose of creating a seal with one or more parts disposed adjacently. At an exemplary step 100, a ceramic matrix composite ("CMC") 500 may be provided (see FIG. 3). In at least one embodiment, a CMC 500 may comprise one or more ceramic reinforcement plies disposed in a ceramic matrix. Suitable ceramic matrices may include a silicon-containing ceramic, such as but not limited to, a silicon carbide (SiC) matrix or a silicon nitride (Si₃N₄) matrix. Exemplary ceramic reinforcement of the CMC 500 may include silicon-containing ceramic fibers, such as but not limited to, SiC fibers or Si₃N₄ fibers. The CMC 500 may include, but is not limited to, a SiC/SiC CMC in which the SiC fiber plies may be disposed within a SiC matrix. An exemplary fiber ply may have a fiber architecture, which refers to an ordered arrangement of the fiber tows relative to one another, such as a two-dimensional (2D) woven ply or a three-dimensional (3D) structure. In at least one alternative embodiment, a monolithic ceramic may not contain either fibers or reinforcements, and may be formed of a single material. Suitable monolithic ceramics may include silicon-containing ceramics, such as SiC or Si₃N₄.

Next, at an exemplary step 200 of FIG. 2, an optional bond coat layer 600 may be deposited on the CMC 500 (see FIG. 3). In at least one embodiment, the optional bond coat layer 600 may comprise one or more of the following: silicon, silicon-containing material e.g., hafnium silicate, silicon oxide, silicon carbide, silicon oxycarbide, mullite; combinations thereof, and the like. Suitable deposition techniques may include, but are not limited to, thermal spraying, e.g., air plasma spraying; slurry spraying, vapor deposition processes, combinations thereof, and the like. The optional deposited bond coat layer 600 may exhibit and possess a thickness of approximately 1 mil (0.254 mm) to approximately 10 mil (0.254 mm).

Next, at either an exemplary step 300 of FIG. 2, a ceramic powder may be deposited on the optional bond coat layer 600 or CMC to form a ceramic coat layer 700 (See FIG. 3). In at least embodiment of exemplary step 300, the ceramic coat layer 700 may comprise one or more of the following: mullite, silicon nitride, hafnium silicate, ytterbium disilicate, yttrium disilicate, combinations thereof, and the like. Suitable deposition techniques may include, but are not limited to, thermal spraying, e.g., air plasma spraying; slurry spraying, atomic layer deposition (ALD), vapor deposition processes, combinations thereof, and the like. In at least one embodiment, the resultant ceramic coat 700 may exhibit and possess a thickness of approximately 30 mil (0.762 mm) to approximately 100 mil (2.54 mm), and preferably approximately 60 mil (1.542 mm) to approximately 80 mil (2.032 mm).

When carrying out an exemplary step 325 of FIG. 2, in at least one embodiment, ceramic powder(s) may be injected into a plasma through powder ports located radially on a plasma spray gun of an air plasma spraying apparatus and may be carried downstream by the flowing plasma. During this time, the ceramic particles may melt, accelerate, and impact the CMC to form a coating. Repeated impacts, from additional ceramic particles, may continue to form, build up and thus form the coating. The resultant coating may exhibit and possess a porosity, e.g., open, closed, interconnected, and combinations thereof, comprising pancake-like deposits, splats, microcracks and splat boundaries formed by the impacted ceramic particles. In at least one embodiment, the porosity may be approximately 5 percent by volume to approximately 30 percent by volume of the ceramic coat. In at least one embodiment, the porosity may exhibit and possess a gradient, that is, a distribution of pore sizes or average pore sizes throughout the coating. In at least one embodiment, the pores sizes may exhibit and possess an average fine pore size 800 of approximately 1 µm to approximately 25 µm, an average coarse pore size 900 of approximately 30 µm to approximately 55 or µm, and combinations thereof.

The gradient within the porosity of the ceramic coat 700 may be attributed to adjusting one or more deposition parameters. For example, when depositing the ceramic coat 700 using an air plasma spraying technique, a distance between a nozzle of an air plasma spray gun of an air plasma spraying apparatus and a surface of the CMC may be adjusted. In addition, by increasing and/or decreasing the distance each time a layer of the ceramic coat is deposited, the resulting average pore size of the ceramic coat 700 may increase and/or decrease thus causing the porosity gradient. Furthermore, by increasing and/or decreasing a voltage of the air plasma spraying apparatus, the resulting average pore size of the ceramic coat 700 may increase and/or decrease thus causing the porosity gradient. Moreover, by increasing and/or decreasing a powder feed rate of the air plasma spraying apparatus, the resulting average pore size of the ceramic coat 700 may increase and/or decrease thus causing the porosity gradient. Even further, by increasing a temperature of, e.g., heat treating, the surface of the CMC prior to depositing the ceramic coat 700, the resulting average pore size of the ceramic coat 700 may increase and/or decrease thus causing the porosity gradient.

In the alternative, when carrying out exemplary steps 350 and 375 of FIG. 2, a mixture of at least one ceramic powder and one or more polymeric powders may be deposited on the CMC 500 or the optional bond coat layer 600 to form a ceramic coat layer 700 (See FIG. 3). In at least embodiment of exemplary step 350, the ceramic powder may include, but is not limited to, one or more of the following: mullite, hafnium silicate, ytterbium disilicate, yttrium disilicate, and combinations thereof, and the like. In at least one embodiment of exemplary step 350, the polymeric powders may include any polymer exhibiting and possessing a melting point temperature of equal to or greater than the deposition technique temperature for depositing the mixture and less than the heat treatment temperature range to be discussed. Suitable polymeric powder(s) may include, but are not limited to, polyester, combinations thereof, and the like (1% to 10% by weight of the mixture). Suitable deposition techniques of the mixture may include, but are not limited to, thermal spraying, e.g., air plasma spraying; slurry spraying, atomic layer deposition (ALD), vapor deposition processes, combinations thereof, and the like. Once deposited, at an exemplary step 375, the deposited mixture may be heat treated to remove the polyester and fabricate the porosity gradient within the at least one ceramic coat. Suitable heat treatment techniques may include, but are not limited to, any technique capable of achieving a temperature range that can pyrolyze and remove the polymeric powders from the deposited mixture. Suitable temperature range for use herein may include temperatures of approximately of 1,400°F (760 °C) to approximately 2,700°F (1482 °C). In at least one embodiment, the porosity may be approximately 5 percent by volume to approximately 30 percent by volume of the ceramic coat. In at least one embodiment, the porosity may exhibit and possess a gradient, that is, a distribution of pore sizes or average pore sizes throughout the coating. In at least one embodiment, the pores sizes may exhibit and possess an average fine pore size 800 of approximately 1 µm to approximately 25 µm, an average coarse pore size 900 of approximately 30 µm to approximately 55 µm, and combinations thereof.

When carrying out either exemplary step 325 or both exemplary steps 350 and 375 of FIG. 2, the resultant ceramic coat 700 may exhibit and possess a porosity gradient. For example, as illustrated in FIG. 4, the porosity of the ceramic coat 700 may exhibit and possess a gradient or distribution of average fine pore sizes 800 proximate the optional bond coat 600 or CMC 500 that increase in size to an average coarse pore size 900 proximate an exterior surface 1000 of the ceramic coat 700. In yet another example, as illustrated in FIG. 5, the porosity of the ceramic coat 700 may exhibit and possess a gradient or distribution of average coarse pore sizes 900 proximate the optional bond coat 600 or CMC 500 that decrease in size to an average fine pore size 800 proximate an exterior surface 1000 of the ceramic coat 700.

Once completing either exemplary step 325 or both exemplary steps 350 and 375 of FIG. 2, the resultant ceramic coat 700 also may exhibit a thickness of approximately 30 mil (0.762 mm) to approximately 100 mil (2.54 mm), and preferably approximately 60 mil (1.524 mm) to approximately 80 mil (2.032 mm). At an exemplary step 400 of FIG. 2, the resultant ceramic coat 700 may be machined to create a seal or "seal-like" exterior surface. Any machining technique capable of removing the ceramic coat material and creating the desired seal or "seal-like" surface disclosed herein may be utilized. After being machined, the resultant machined ceramic coat 700 may exhibit and possess a thickness of approximately 30 mil (0.762 mm) to approximately 50 mil (1.27 mm).

Although the exemplary porous machined coating disclosed herein is described for use in non-gas path environs, the exemplary porous machined coating exhibits and possesses the potential for use in gas path applications for lower temperature applications. For example, the porous machined coatings may be utilized for blade outer air seals and may also improve aerodynamic efficiency with respect to airfoil applications in low temperature operating environments within a gas turbine engine. Certainly, where ever low temperature operating environments within a gas turbine engine are, the exemplary porous machined coating may be applied so as to provide a cost-effective solution compared to more expensive coatings presently used.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method of fabricating a porous machined coating for a ceramic matrix composite (500), comprising the steps of:
providing a ceramic matrix composite (500);
optionally depositing on the ceramic matrix composite (500) at least one bond coat (600);
depositing on the at least one optional bond coat (600) at least one ceramic powder to form at least one ceramic coat (700); and
machining the at least one ceramic coat (700) to form at least one machined ceramic coat (700),
wherein the at least one machined ceramic coat (700) comprises a porosity gradient of approximately 5 percent by volume to approximately 30 percent by volume, the porosity gradient comprising an average fine pore size (800) range of approximately 1 µm to approximately 25 µm, to an average coarse pore size (900) range of approximately 30 µm to approximately 55 µm.

2. The method of claim 1, wherein depositing the at least one ceramic powder comprises air plasma spraying the at least one ceramic powder.

3. The method of claim 2, wherein air plasma spraying includes adjusting one or more of the following parameters:
a distance between a nozzle of an air plasma spraying apparatus and a surface of the ceramic matrix composite (500);
a voltage of the air plasma spraying apparatus;
a powder feed rate of the air plasma spraying apparatus; and
a temperature of the surface of the ceramic matrix composite (500), optionally wherein adjusting the temperature of the surface of the ceramic matrix composite (500) includes heat treating the surface of the ceramic matrix composite (500) prior to depositing the at least one ceramic powder.

4. The method of any preceding claim, wherein, prior to depositing the at least one ceramic powder, further comprising providing the at least one ceramic powder comprising a mixture of one or more ceramic powders and one or more polymeric powders, optionally wherein the at least one ceramic powder comprises one or more of the following: mullite, hafnium silicate, ytterbium disilicate, yttrium disilicate, and combinations thereof.

5. The method of claim 4, wherein the polymeric powders include at least polyester; and/or wherein the polymeric powder is present in an amount of approximately 1 percent by weight of the mixture to approximately 10 percent by weight of the mixture.

6. The method of claim 4 or 5, further comprising heat treating the at least one deposited mixture of one or more ceramic powders and one or more polymeric powders at a temperature of approximately of 1,400°F (760 °C) to approximately 2,700°F (1482 °C), to form the at least one ceramic coat (700) comprising the porosity gradient.

7. The method of any preceding claim, wherein the at least one deposited ceramic coat (700) includes a thickness of approximately 30 mil (0.76 mm) to approximately 100 mil (2.54 mm); and/or wherein the at least one machined ceramic coat (700) comprises a thickness of approximately 30 mil (0.762 mm) to approximately 50 mil (1.27 mm).

8. The method of any preceding claim, further comprising:
pre-heating the ceramic matrix composite (500) prior to optionally depositing the at least one bond coat (600); and/or
pre-heating the ceramic matrix composite (500) and the at least one optional bond coat (600) prior to depositing the at least one ceramic powder.

9. A gas turbine engine component, comprising:
a ceramic matrix composite (500) having at least one optional bond coat (600), and the at least one machined ceramic coat (700) comprises a porosity of approximately 5 percent by volume to approximately 30 percent by volume, the porosity comprising a gradient having an average fine pore size (800) range of approximately 1 µm to approximately 25 µm, to an average coarse pore size (900) range of approximately 30 µm to approximately 55 µm.

10. The method or gas turbine engine component of any preceding claim, wherein the average fine pore size (800) range of the gradient is proximate to an interface between the at least one optional bond coat (600) and the at least one machined ceramic coat (700); the average coarse pore size (900) range of the gradient is proximate to an exterior surface (1000) of the at least one machined ceramic coat (700); and, an average pore size of the gradient increases from the interface to the exterior surface (1000).

11. The method or gas turbine engine component of any preceding claim, wherein the average coarse pore size (900) range of the gradient is proximate to an interface between the at least one optional bond coat (600) and the at least one machined ceramic coat (700); and the average fine pore size (800) range of the gradient is proximate to an or the exterior surface (1000) of the at least one machined ceramic coat (700); and, an average pore size of the gradient decreases from the interface to the exterior surface (1000).

12. The gas turbine engine component of any of claims 9 to 11, wherein the at least one ceramic coat (700) comprises an at least one air plasma-sprayed layer ceramic coat (700).

13. The gas turbine engine component of any of claims 9 to 12, wherein the at least one ceramic coat (700) comprises a thickness of approximately 30 mil (0.762 mm) to approximately 100 mil (2.54 mm).

14. The gas turbine engine component of any of claims 9 to 13, wherein the at least one ceramic coat (700) comprises one or more of the following: mullite, hafnium silicate, ytterbium disilicate, yttrium disilicate, and combinations thereof.

15. The method or gas turbine engine component of any preceding claim, wherein the at least one optional bond coat (600) comprises one or more of silicon, silicon-containing material, silicon oxycarbide, mullite, and combinations thereof.
